# EUROPEAN PATENT APPLICATION

(11) **EP 1 739 928 A1**
(43) Date of publication of application: **03.01.2007**
(21) Application number: 06394011.8
(22) Date of filing: 31.05.2006
(51) Int. Cl.: H04L 29/08

(54) **Session control for mass session events**

(30) Priority: 30.06.2005 US 172257
(71) Applicant: Nortel Networks Limited, St.Laurent, Quebec H4S 2A9 (CA)
(72) Inventor: Taylor, Richard C., Manolick, Ontario K4M 1A2 (CA)
(74) Representative: Coyle, Philip Aidan

(57) **Abstract**

The present invention provides a policy decision function and multiple policy enforcement functions to handle mass session events. The policy decision function may receive policy parameters related to the mass session event from the application, the policy enforcement functions, or other network entities, and determine a session policy for the mass session event based on the policy parameters and perhaps other predefined policy rules. Policy information corresponding to the policy established for the mass session event is then sent to the policy enforcement functions, which will take the necessary steps to implement the policy for the mass session event based on the policy information received. The policy enforcement functions may monitor traffic parameters in the through traffic, wherein the traffic parameters help to identify traffic associated with the mass session event.

## Description

### Field of the Invention

The present invention relates to communications, and in particular to controlling sessions associated with mass session events.

### Background of the Invention

Telephony systems are generally engineered to handle an expected amount of traffic. The amount of traffic is generally fairly predictable, given the large number of users and historical data regarding the use of the telephony networks. On occasion, certain events may trigger excessive use of the telephony network, wherein the capacity of the telephony network is exceeded for a period of time. A mass calling event occurs when a large number of callers try to contact a given entity all at once or over a relatively short period of time. Mass calling events may be initiated in association with television or radio contests, ticket sales, large-scale emergencies, disasters, registrations, or voting. Whether these mass calling events are planned or unexpected, there is a need to properly handle mass communication events. Events that will likely cause a mass calling event are often addressed ahead of time, wherein additional resources are provided or otherwise allocated prior to the event, such that the additional volume of traffic can be handled as desired. Additional steps can be taken to manage or limit call volume in light of existing resources. In traditional circuit-switched networks, special trunks, referred to as choke trunks, are employed to handle calls associated with the event, and certain call control techniques may be employed to limit the amount of traffic as necessary when the resources of the dedicated trunks are exceeded.

Unfortunately, the next generation of voice-over-packet networks is inherently less adept at handling mass events, because dedicated trunks and entities for allowing access to these trunks are not generally available. Most voice-over-packet mechanisms for controlling sessions, including voice calls, have been aimed at the managing of bandwidth or quality of service by the access networks. Bandwidth and quality of service issues in the core network that connects the access networks are generally addressed by over-provisioning the networks, such that many resources are often wasted. This configuration often leaves the networks handling mass session events and the servers to which these mass session events are directed largely uncontrolled, and often overwhelmed when such events take place. Accordingly, there is a need to provide a mechanism to properly and efficiently control mass session events, whether planned or unplanned, in a defined fashion. There is a further need to handle, including prioritizing, incoming and outgoing calls to and from select locations, including geographic locations, addresses, domains, or numbers, at certain times or dates.

### Summary of the Invention

The invention provides a System and a method as defined in the appended claims.) The present invention provides a policy decision function and one or more policy enforcement functions to handle mass session events, such as those associated with radio or television contests, promotional or sales events, and emergencies, where a significant number of sessions may be initiated within a short period of time. In many instances, the sessions are associated with, and likely directed to, an application. The policy decision function may receive policy parameters related to the mass session event and determine a session policy for the mass session event based on the policy parameters and perhaps other predefined policy rules. The policy parameters and related information may be received from the application, the policy enforcement functions, or other network entities. Policy information corresponding to the policy established for the mass session event is then sent to the policy enforcement functions, which will take the necessary steps to implement the policy for the mass session event based on the policy information received. In particular, the policy enforcement functions may monitor traffic parameters in the traffic, wherein the traffic parameters help to identify traffic associated with the mass session event. Once traffic associated with the mass session event is detected, traffic is handled as dictated by the policy. Such handling may include simply allowing the traffic to pass without any processing or dropping the traffic.

In one embodiment, the traffic parameters assist the policy enforcement functions in detecting session initiation messages used to initiate a session. The traffic parameters monitored in the session initiation messages will help to determine whether the session being initiated is part of the mass session event. The policy enforcement functions may be implemented in an entity separate from the policy decision function. Further, the policy enforcement functions may be located at the edge of a protected network and distributed along the edge of the network to allow policy enforcement for sessions associated with the mass session event to occur at the edge of the protected network. The policy decision function and the policy enforcement functions may be implemented in a single device. In another embodiment, the policy decision function is located in a service node and the policy enforcement functions are associated with different border gateways, which may be logical or physical entities. Notably, each policy enforcement function may receive the same policy information or different policy information to allow different policies to be enforced at different policy enforcement functions, as necessary. Policies may be updated in a dynamic fashion as dictated by network capacity, traffic demands, or predetermined policy criteria. The traffic parameters that are monitored may bear on the destination of a session, the originator of a session, the address, domain, number, area, or region associated with the origin of the session, the type of session, the media involved in the session, or other information deemed pertinent to detecting a session associated with the mass session event.

Those skilled in the art will appreciate the scope of the present invention and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the invention, and together with the description serve to explain the principles of the invention.

FIGURE 1 is a block representation of a communication environment according to one embodiment of the present invention.

FIGURES 2A-2C illustrate the overall operation of the present invention.

FIGURE 3 is a flow diagram illustrating operation of a service node according to one embodiment of the present invention.

FIGURE 4 is a flow diagram illustrating operation of a border gateway according to one embodiment of the present invention.

FIGURE 5 is a block representation of a service node according to one embodiment of the present invention.

FIGURE 6 is a block representation of a border gateway according to one embodiment of the present invention.

### Detailed Description of the Preferred Embodiments

The embodiments set forth below represent the necessary information to enable those skilled in the art to practice the invention and illustrate the best mode of practicing the invention. Upon reading the following description in light of the accompanying drawing figures, those skilled in the art will understand the concepts of the invention and will recognize applications of these concepts not particularly addressed herein. It should be understood that these concepts and applications fall within the scope of the disclosure and the accompanying claims.

The present invention provides a technique for handling mass session events associated with any type of communications, including voice-based calls, streaming media sessions, or other types of communication session. A mass session event is any type of predetermined or unexpected event in which a very large number of sessions are initiated to a particular entity or associated entities. Prior to delving into the details of the present invention, an overview of a communication environment in which the present invention may be practiced is described.

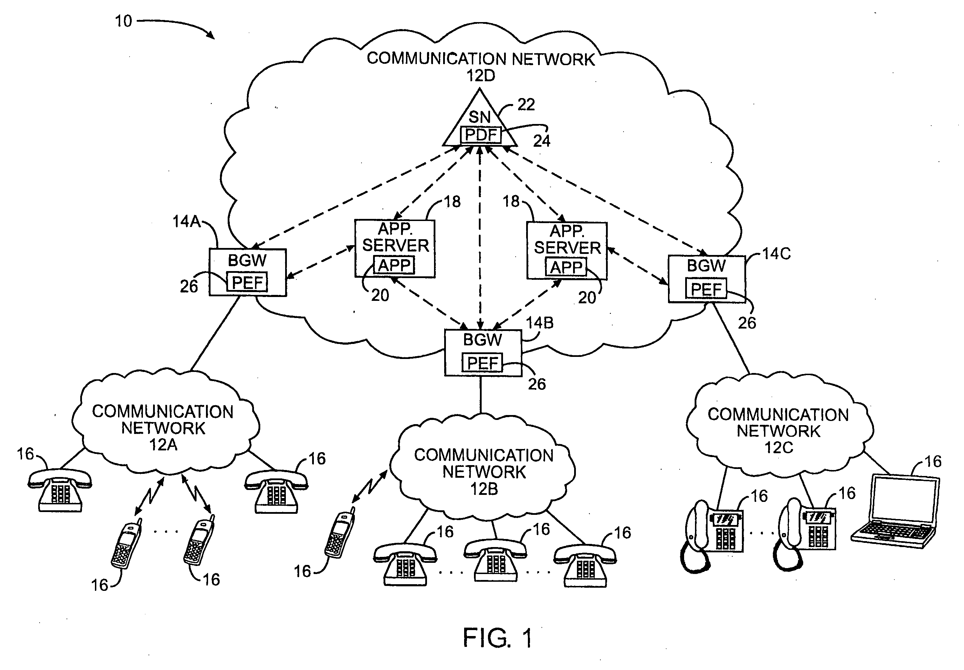

With reference to Figure 1, a communication environment 10 is illustrated including multiple communication networks 12A-12D, wherein communication network 12D is a relatively centralized communication network that is coupled to communication networks 12A-12C through corresponding border gateways (BGWs) 14A-14C. The border gateways 14A-14C may take many forms to allow the communication network 14D to interwork with the respective communication networks 12A-12C. As implemented, the border gateway 14 may be a logical or physical entity, such as a proxy, call switch, session border control, or other network entity. Through this interworking, various types of communication terminals 16, which may be wired or wireless, are able to communicate with each other across numerous communication networks 12A-12D as well as with entities associated with any of these communication networks 12A-12D. Such communications may be packet-based sessions, in whole or in part, and may be directed to one or more application servers 18 in association with a mass session event controlled by an application 20 running one or more of the application servers 18. For example, when tickets for a popular concert go on sale, the application 20 may be a ticket sales application. Alternatively, the application 20 may control calls, instant messages, or votes in association with a radio or television contest, such as American Idol^{®}.

A service node 22 may be provided to act as a call server or proxy to assist in handling the sessions that are attempted or established in association with a mass session event. The sessions are handled according to an appropriate policy, which may define what sessions are associated with a mass session event, as well as how to handle the initiation of the sessions or control the sessions once they are established. In general, a policy decision function (PDF) 24 will cooperate with an appropriate application associated with a mass calling event, as well as with other entities relevant to the mass session event, and determine a policy that should be enforced in association with the mass session event. Policies are then provided to policy enforcement functions (PEFs) 26, which are used to enforce the policies. As illustrated, the PDF 24 is implemented in the service node 22, and the PEFs 26 are implemented in the border gateways 14A-14C in a distributed fashion.

In the illustrated embodiment, the PEFs 26 will enforce policies in a distributed fashion at the edge of the communication network 12D for mass session events associated with an application 20 running on one or more of the application servers 18. As such, attempts to establish sessions in association with a mass session event to the application 20 will be processed according to the appropriate policies at the PEFs 26. The border gateways 14A-14C will be able to monitor traffic flowing therethrough to detect traffic parameters identifying sessions associated with the mass calling event and handle the session initiation attempt, the resultant session, or a combination thereof, according to the policy provided by the PDF 24. Depending on the policy, the session may be handled in any number of ways, including simply being allowed, being redirected, blocked, or processed in any other desired fashion. The policy may also dictate resource requirements and quality of service levels to provide with the session.

The PDF 24 and the PEFs 26 may be implemented in other entities than those illustrated. Further, the PDF 24 and a PEF 26 may be implemented on a common entity. For example, the service node 22 may support a PDF 24 and one or more PEFs 26. Each PDF 24 and PEF 26 may be able to handle policies from different types and from any number of mass session events.

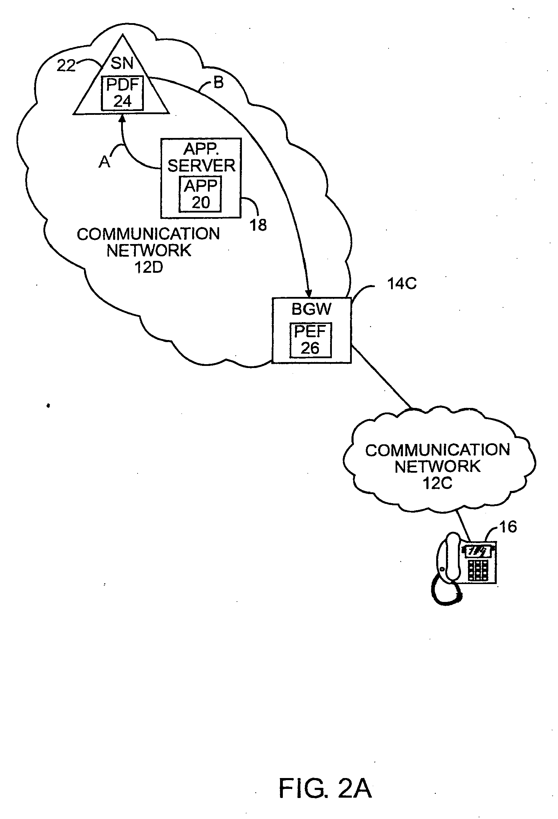

With reference to Figures 2A-2C, a basic process for implementing policies at the edge of a controlled communication network 12C is illustrated. With particular reference to Figure 2A, the application 20 running on the application server 18 may provide policy parameters to the PDF 24 in the service node 22 (step A). The PDF 24 will use these policy parameters as well as information from other entities if desired, and create a common policy or unique policies, as the case may be, for the various border gateways 14A-14C. In Figure 2A, only border gateway 14C is illustrated, and as such, the PDF 24 and the service node 22 will deliver a policy to the border gateway 14C (step B), as well as any other border gateways 14A and 14B, if necessary. Given the mass session event, different border gateways 14A-14C may require different policies or may not be involved in a particular mass session event.

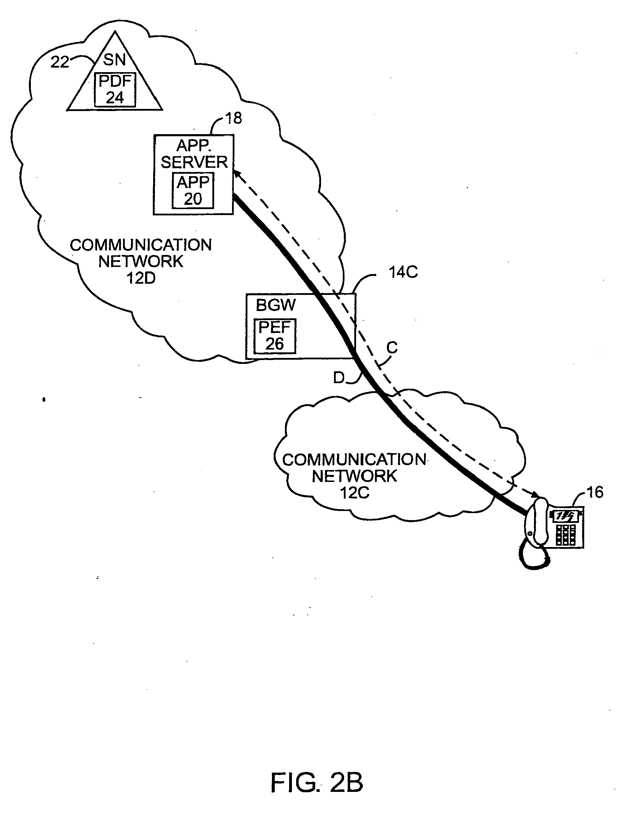

With reference to Figure 2B, a communication terminal 16 or other entity effectively representing a communication terminal 16 in the controlled communication network 12C exchanges session initiation messages, such as those supported by the Session Initiation Protocol (SIP) with the application server 18 in an effort to establish an associated session (step C). Assuming the PEF 26 of the border gateway 14C has received an appropriate policy pertaining to the session being attempted, the PEF 26 will determine how to handle the attempt to initiate the session and operate accordingly. The session initiation messaging may be redirected to another application server 18 or other entity, dropped, or allowed to pass, if deemed appropriate. If the session initiation messages are allowed to be exchanged between the application server 18 and the communication terminal 16, a communication session may be established between the application server 18 and the communication terminal 16 (step D).

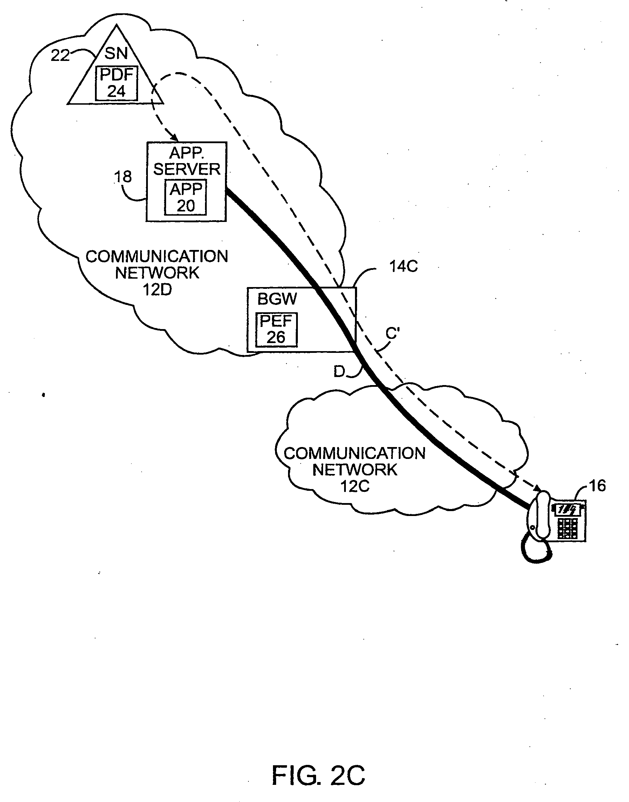

In an alternative embodiment illustrated in Figure 2C, the service node 22 may act as a proxy for the communication terminal 16, wherein the session initiation messages are effectively handled on behalf of the communication terminal 16 by the service node 22. As such, messaging will be exchanged between the service node 22 and the application server 18, as well as between the service node 22 and the communication terminal 16 (step C') to establish the communication session (step D). With these embodiments, admission control for sessions associated with a mass session event may be effectively implemented at the edge of the communication network 12D by the PEFs 26, which are located in the border gateways 14.

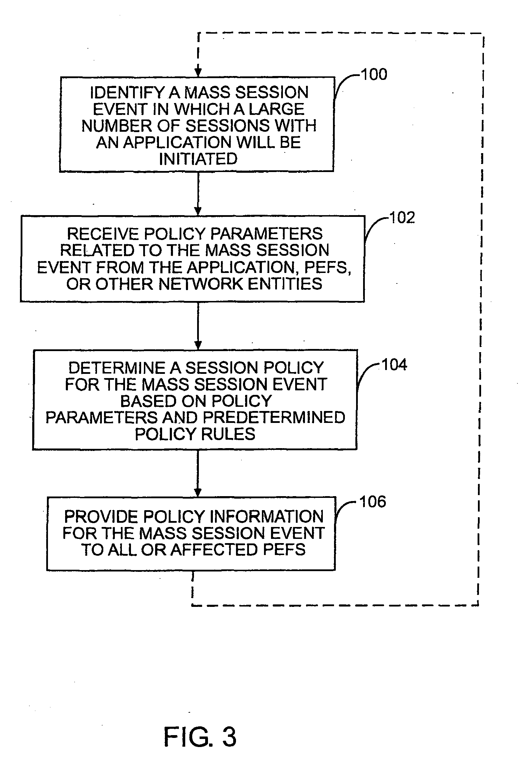

With reference to Figure 3, a basic flow diagram is provided to illustrate operation of a PDF 24. The PDF 24 will identify a mass session event in which a large number of sessions involving the application 20 will be initiated, either based on predefined criteria or instantaneous information received form the network (step 100). The PDF 24 will have previously received or dynamically will receive policy parameters related to the mass session event from the application 20, PEFs 26, or other network entities (step 102) and then determine a session policy for the mass session event based on the policy parameters and other predetermined policy rules (step 104). The session policy may include a general policy to be implemented by the various PEFs 26 or specific policies for different PEFs 26 or groups of PEFs 26. Again, the PEFs 26 may be located in various locations, including at the edge of a given communication network that is to be controlled, such as communication network 12C of Figure 1. Once the session policy for the mass session event is determined, policy information is provided for the mass session event to all or the affected PEFs 26 (step 106). This process may continuously repeat for other mass session events in a concurrent fashion, as well as repeat for the given mass session event, wherein the policies may be dynamically updated and distributed to the PEFs 26 as policy parameters change. These changing policy parameters may be received throughout the mass session event by the PDF 24.

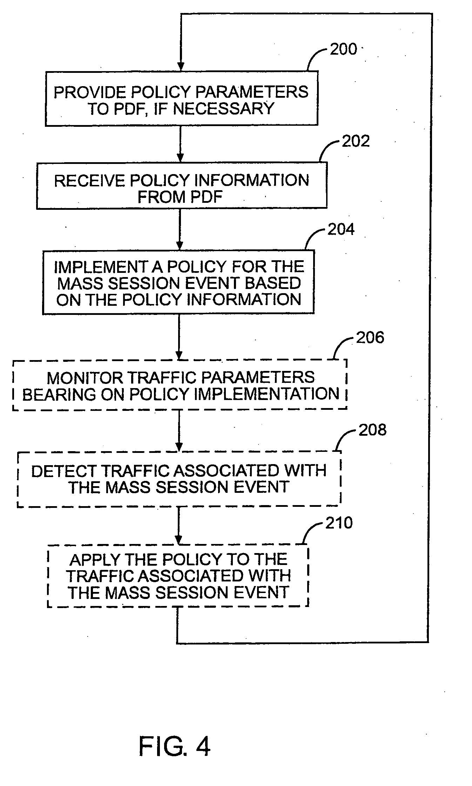

With reference to Figure 4, a flow diagram is provided to illustrate operation of the PEFs 26, according to one embodiment of the present invention. Initially, the PEFs 26 may provide the policy parameters or related information to the PDF 24, if necessary (step 200). These policy parameters may be requested by the PDF 24 in response to an application 20 indicating that a mass session event may or will occur. Alternatively, the policy parameters may simply be provided to the PDF 24 on a periodic or occasional basis. In other embodiments, the PEFs 26 may not need to provide policy parameters to the PDF 24 to enable the PDF 24 to establish session policy. Once the PDF 24 has established a session policy, policy information bearing on the session policy is received from the PDF 24 (step 202), wherein the PEF 26 will implement the policy for the mass session event based on the policy information (step 204).

Implementation of the given policy is illustrated in the dashed steps 206, 208, and 210, wherein the PEF 26 will monitor traffic parameters bearing on policy implementation (step 206). Such monitoring may take place in the border gateways 14A-14C, which monitor traffic, including signaling and data, to determine whether the signaling messages or data relate to a session corresponding to a mass session event for which a policy is in place. The PEF 26 will detect traffic associated with the mass session event (step 208), and apply the appropriate policy to the traffic associated with the mass session event (step 210). For example, the traffic may be a session initiation message or a session in a mass session event, wherein the PEF 26 is configured to identify session initiation messages used in an attempt to initiate sessions in the mass session event. Processing of the session initiation message is provided according to the defined policy. The processing may include simply allowing the session initiation message to proceed uninterrupted to the service node 22, which acts as a proxy, or directly or indirectly to the application server 18.

The traffic parameters used to determine whether a session is a part of a mass session event may take many forms and require different techniques to be identified. For example, traffic parameters may bear on the type of protocol being used to initiate a session. Alternatively, the traffic parameters may identify a specific protocol message, originator of a session, destination of a session, type of session, type of media within the session, type of application associated with the session, and the like. The traffic parameters may also bear on a geographic area or region from which the call is being originated or to which the call is destined. Origination and destination information may be determined from area codes, directly numbers, or the like associated with an origin or destination for the session. Similarly, SIP or IP addresses, as well as domains, associated with the origin or destination of the session may be analyzed in whole or in part to help identify a session associated with a mass session event. In many instances, the destination associated with a session being attempted is important in determining whether a session is a session associated with a mass session event.

In addition to monitoring traffic parameters to determine if a session is a session for a mass session event, other parameters may bear on how a session of a mass session event is handled according to a defined policy. For example, the policy being enforced by a PEF 26 may limit the number of sessions for a particular event, for a particular time interval, or a particular date. Further, various distribution policies may be implemented, wherein the overall effect of the distributed policy enforcement provides proportional fairness or weighting among different locations, networks, or types of originators or communication terminals 16 originating the session. Each PEF 26, when operating within a border gateway 14, may be configured to limit the total number of sessions from a particular region or network, as well as dynamically cooperate with the PDF 24 to adjust policies to implement network balancing policies to provide a more even distribution of traffic.

Various blocking strategies may also be implemented based on any number of parameters in general, or specific traffic parameters associated with a given session. For example, liberal policies may be associated with dialing emergency numbers, such as 911, whereas policies associated with ticket sales, television contests, and the like may have more limited policies. The policies may limit the number of total calls, or the number of calls over a given period of time. Certain policies may allow 100 sessions per hour during a certain time period, where others may only allow ten sessions per hour to be established. Other policies may dictate redirecting sessions to alternate application servers 18 after certain session criteria are reached, as well as providing certain calls with a higher or lower priority. The PEFs 26 may operate to prioritize incoming or outgoing sessions as well as provide load balancing to or from select origins, destinations, locations, numbers, or addresses at different times and dates. Those skilled in the art will recognize the extreme flexibility in using different parameters and policies to effectively control sessions associated with mass session events.

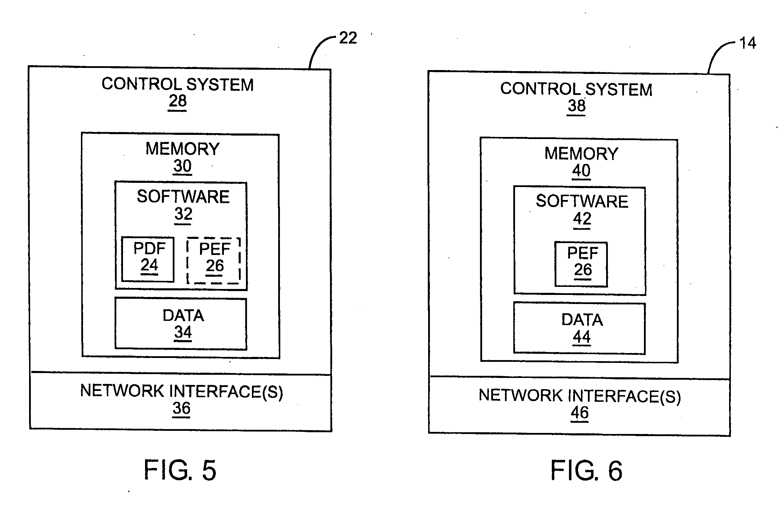

With reference to Figure 5, a block representation of a service node 22 is illustrated according to one embodiment of the present invention. The service node 22 is illustrated as having a control system 28 with sufficient memory 30 for the requisite software 32 and data 34 to operate as described above. The software 32 may include a PDF 24, and optionally a PEF 26 in select embodiments. The control system 28 will also be associated with one or more network interfaces 36 to facilitate communications with the various border gateways 14A-14C, application servers 18, and other network entities.

With reference to Figure 6, a border gateway 14 is illustrated as having a control system 38 with sufficient memory 40 for the requisite software 42 and data 44 to operate as described above. The software 42 may include a PEF 26, and the control system 38 may be associated with one or more network interfaces 46 to facilitate interaction with the service node 22, application server 18, and other network entities.

Those skilled in the art will recognize improvements and modifications to the preferred embodiments of the present invention. All such improvements and modifications are considered within the scope of the concepts disclosed herein and the claims that follow.

## Claims

1. A method for handling traffic associated with mass session events comprising:
• receiving policy parameters related to a mass session event;
• determining a session policy for the mass session event based on the policy parameters; and
• sending policy information corresponding to the session policy to at least one policy enforcement function, which is adapted to detect traffic associated with the mass session event and implement the session policy for the traffic.

2. The method of claim 1 wherein the policy information is sent to a plurality of enforcement functions to facilitate distributed implementation of the session policy.

3. The method of claim 2 wherein the plurality of enforcement functions are provided along an edge of a communication network.

4. The method of claim 2 wherein the session policy comprises different policies for certain of the plurality of enforcement functions, and different policy information corresponding to the different policies is sent to the certain of the plurality of enforcement functions.

5. The method of claim 1 wherein an application is associated with the mass session event and at least certain of the policy parameters are received from the application.

6. The method of claim 1 wherein the session policy is dynamically updated, and updated policy information corresponding to an updated session policy is sent to the at least one policy enforcement function.

7. The method of claim 1 further comprising, at the at least one policy enforcement function:
• determining a policy to implement for the traffic associated with the mass session event based on the policy information;
• monitoring traffic parameters;
• detecting the traffic associated with the mass session event based on the traffic parameters; and
• applying the policy to the traffic associated with the mass session event.

8. A method for handling traffic associated with mass session events comprising:
• receiving policy information corresponding to a session policy for a mass session event created by a policy decision function;
• determining a policy to implement for traffic associated with the mass session event;
• monitoring traffic parameters;
• detecting the traffic associated with the mass session event based on the traffic parameters; and
• applying the policy to the traffic associated with the mass session event.

9. The method of claim 8 wherein the traffic parameters identify session initiation messages for sessions associated with the mass session event.

10. The method of claim 9 wherein applying the policy comprises determining whether to allow the session initiation messages to be forwarded toward their intended destinations and handling the session initiation messages accordingly.

11. The method of claim 9 wherein the traffic parameters bear on the intended destinations of the session initiation messages.

12. The method of claim 8 wherein the traffic parameters bear on at least one of the group consisting of a protocol used for communications, a type of message, an originator of a session, a location or area from which a session is originated, domain, and a media type carried by the traffic.

13. The method of claim 8 wherein the policy is further based at least in part on one of the group consisting of load balancing, priority of sessions, time or date of session initiation, total number of sessions, and number of session over a given period.

14. The method of claim 8 wherein the mass session event is one of the group consisting of a radio or television contest, sales event, promotional event, registration, voting, or emergency.

15. A system for handling traffic associated with mass session events comprising:
• at least one communication interface; and
• a control system associated with the at least one communication interface and adapted to:
• receive policy parameters related to a mass session event;
• determine a session policy for the mass session event based on the policy parameters; and
• send policy information corresponding to the session policy to at least one policy enforcement function, which is adapted to detect traffic associated with the mass session event and implement the session policy for the traffic.

16. The system of claim 15 wherein the policy information is sent to a plurality of enforcement functions to facilitate distributed implementation of the session policy.

17. The system of claim 16 wherein the plurality of enforcement functions are provided along an edge of a communication network.

18. The system of claim 16 wherein the session policy comprises different policies for certain of the plurality of enforcement functions, and different policy information corresponding to the different policies is sent to the certain of the plurality of enforcement functions.

19. The system of claim 15 wherein an application is associated with the mass session event and at least certain of the policy parameters are received from the application.

20. The system of claim 15 wherein the session policy is dynamically updated, and updated policy information corresponding to an updated session policy is sent to the at least one policy enforcement function.

21. The system of claim 15 further comprising at the at least one policy enforcement function providing a policy enforcement function adapted to:
• determine a policy to implement for the traffic associated with the mass session event based on the policy information;
• monitor traffic parameters;
• detect the traffic associated with the mass session event based on the traffic parameters; and
• apply the policy to the traffic associated with the mass session event.

22. A system for handling traffic associated with mass session events comprising:
• at least one communication interface; and
• a control system associated with the at least one communication interface and adapted to:
• receive policy information corresponding to a session policy for a mass session event created by a policy decision function;
• determine a policy to implement for traffic associated with the mass session event;
• monitor traffic parameters;
• detect traffic associated with the mass session event based on the traffic parameters; and
• apply the policy to the traffic associated with the mass session event.

23. The system of claim 22 wherein the traffic parameters identify session initiation messages for sessions associated with the mass session event.

24. The system of claim 23 wherein applying the policy comprises determining whether to allow the session initiation messages to be forwarded toward their intended destinations and handling the session initiation messages accordingly.

25. The system of claim 23 wherein the traffic parameters bear on the intended destinations of the session initiation messages.

26. The system of claim 22 wherein the traffic parameters bear on at least one of the group consisting of a protocol used for communications, a type of message, an originator of a session, a location or area from which a session is originated, domain, and a media type carried by the traffic.

27. The system of claim 22 wherein the policy is further based at least in part on one of the group consisting of load balancing, priority of sessions, time or date of session initiation, total number of sessions, and number of sessions over a given period.

28. The system of claim 22 wherein the mass session event is one of the group consisting of a radio or television contest, sales event, promotional event, registration, voting, or emergency.
